(19) Europäisches Patentamt
European Patent Office
Office européen des brevets

(11) EP 3 505 563 A1

(12) # EUROPEAN PATENT APPLICATION
published in accordance with Art. 153(4) EPC

(43) Date of publication:
**03.07.2019 Bulletin 2019/27**

(21) Application number: **17843671.3**

(22) Date of filing: **24.08.2017**

(51) Int Cl.:
***C08L 1/02*** *(2006.01)* ***C08J 3/02*** *(2006.01)*
***C08K 3/10*** *(2018.01)* ***C09K 3/00*** *(2006.01)*

(86) International application number:
**PCT/JP2017/030252**

(87) International publication number:
**WO 2018/038194 (01.03.2018 Gazette 2018/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.08.2016 JP 2016165639**

(71) Applicant: **Oji Holdings Corporation**
**Chuo-ku**
**Tokyo 104-0061 (JP)**

(72) Inventors:
- **MIZUKAMI Moe**
  **Tokyo 104-0061 (JP)**
- **OZAKI Takuri**
  **Tokyo 104-0061 (JP)**
- **NAKAMURA Akiko**
  **Tokyo 104-0061 (JP)**

(74) Representative: **Godemeyer Blum Lenze**
**Patentanwälte**
**Partnerschaft mbB - werkpatent**
**An den Gärten 7**
**51491 Overath (DE)**

(54) **FIBROUS CELLULOSE-CONTAINING MATERIAL AND METHOD FOR PRODUCING FIBROUS CELLULOSE-CONTAINING MATERIAL**

(57) It is an object of the present invention to provide an ultrafine cellulose fiber-containing material having favorable re-dispersibility, which can exhibit excellent thickening properties after it has been re-dispersed, even after long-term storage. The present invention relates to a cellulose fiber-containing material comprising cellulose fibers having a fiber width of 1000 nm or less and a di- or more-valent metal component, wherein the content of the cellulose fibers is 5% by mass or more with respect to the total mass of the cellulose fiber-containing material, the content of the metal component is 0.5% by mass or less with respect to the total mass of the cellulose fiber-containing material, and when the cellulose fiber-containing material is processed into a slurry having a solid concentration of 0.5% by mass, the pH of the slurry is 4 or more.

EP 3 505 563 A1

**Description**

Technical Field

The present invention relates to a cellulose fiber-containing material and a method for producing the cellulose fiber-containing material.

Background Art

In recent years, because of enhanced awareness of alternatives to petroleum resources and environmental consciousness, there has been a focus on materials utilizing reproducible natural fibers. Among natural fibers, cellulose fibers having a fiber diameter of 10 μm or more and 50 μm or less, in particular, wood-derived cellulose fibers (pulp) have been widely used mainly as paper products so far.

Ultrafine cellulose fibers, which have a fiber diameter of 1 μm or less, have also been known as cellulose fibers. In recent years, a sheet composed of such ultrafine cellulose fibers, and a complex comprising an ultrafine cellulose fiber-containing sheet and a resin, have been developed. Since ultrafine cellulose fibers can exhibit thickening action, the use of such ultrafine cellulose fibers as a thickener for various intended uses has also been studied.

When ultrafine cellulose fibers are used, for example, as a thickener, a liquid, in which ultrafine cellulose fibers are dispersed, is generally transported to a processing plant or the like. However, since such a liquid, in which ultrafine cellulose fibers are dispersed, comprises a large amount of dispersion medium, it causes a problem regarding high transport costs. Hence, in order to reduce such transport costs, it has been desired to condense such a liquid, in which ultrafine cellulose fibers are dispersed, as much as possible.

For example, Patent Documents 1 and 2 disclose dry solids comprising ultrafine cellulose fibers. In Patent Document 1, the pH of an aqueous suspension of anionic-modified cellulose nanofibers is adjusted to pH 9 to 11, followed by dehydration and/or drying, to obtain a dry solid of anionic-modified cellulose nanofibers. In Patent Document 2, cellulose having a cellulose type I crystal structure is oxidized using a co-oxidizing agent in the presence of an O-oxyl compound, and thereafter, the oxidized cellulose is purified using an aqueous washing solution containing 50% to 75% of a polar solvent other than water under conditions of pH 5.5 or more, and is then dried to obtain cellulose fibers for use in thickening.

In addition, Patent Document 3 discloses a step of producing cellulose nanofibers from carboxy group-containing cellulose fibers, and a step of mixing the cellulose nanofibers with a re-dispersion promoter to obtain a gelatinous form. Herein, an organic liquid compound and a dispersant are mixed into the gelatinous form, so that cellulose nanofibers are re-dispersed, thereby obtaining a dispersion of cellulose nanofibers. Patent Document 4 discloses an aggregate of ultrafine cellulose fibers having an average fiber width of 2 nm to 50 nm. Herein, in the step of obtaining the ultrafine cellulose fiber aggregate, a coagulant comprising polyvalent metal salts and the like is added. It is to be noted that, in the ultrafine cellulose fiber aggregate obtained in the Examples of Patent Document 4, a large amount of polyvalent metal component used in the aggregation step remains.

Prior Art Documents

Patent Documents

Patent Document 1: JP-A-2015-134873
Patent Document 2: JP-A-2013-104133
Patent Document 3: JP-A-2014-118521
Patent Document 4: International Publication WO 2014/024876

Summary of Invention

Object to be Solved by the Invention

A dry solid of ultrafine cellulose fibers, or a condensate of ultrafine cellulose fibers, such as a gelatinous form, preferably has favorable re-dispersibility. After completion of the re-dispersion, such a dry solid or a condensate is required to exhibit the same thickening properties as those before condensation.

Moreover, there is a case where a condensate of ultrafine cellulose fibers is stored for a long period of time, depending on its mode of use. Even after such long-term storage, the condensate of ultrafine cellulose fibers is required

to exhibit excellent thickening properties after it has been re-dispersed.

Hence, in order to solve the problems of the prior art techniques, the present inventors have conducted studies for the purpose of providing a condensate of ultrafine cellulose fibers having favorable re-dispersibility, wherein the ultrafine cellulose fiber condensate can exhibit excellent thickening properties after it has been re-dispersed, even after long-term storage.

Means for Solving the Object

As a result of intensive studies directed towards achieving the aforementioned object, the present inventors have found that, with regard to a cellulose fiber-containing material comprising cellulose fibers having a fiber width of 1000 nm or less and a di- or more-valent metal component, when the cellulose fiber-containing material is processed into a slurry having a solid concentration of 0.5% by mass, the pH of the cellulose fiber-containing material is adjusted such that the pH of the slurry becomes 4 or more, and as a result, a cellulose fiber-containing material having favorable re-dispersibility and being able to exhibit excellent thickening properties after it has been re-dispersed, even after long-term storage.

Specifically, the present invention has the following configurations.

[1] A cellulose fiber-containing material comprising cellulose fibers having a fiber width of 1000 nm or less and a di- or more-valent metal component, wherein
the content of the cellulose fibers is 5% by mass or more with respect to the total mass of the cellulose fiber-containing material,
the content of the metal component is 0.5% by mass or less with respect to the total mass of the cellulose fiber-containing material, and
when the cellulose fiber-containing material is processed into a slurry having a solid concentration of 0.5% by mass, the pH of the slurry is 4 or more.
[2] The cellulose fiber-containing material according to [1], which further comprises a surfactant.
[3] The cellulose fiber-containing material according to [2], wherein the surfactant is a nonionic surfactant.
[4] The cellulose fiber-containing material according to any one of [1] to [3], which further comprises a water-soluble organic compound.
[5] The cellulose fiber-containing material according to any one of [1] to [4], which is a solid.
[6] The cellulose fiber-containing material according to any one of [1] to [5], having a viscosity retention percentage of 10% or more, wherein the viscosity retention percentage is defined according to the following equation:

$$\text{Viscosity retention percentage (\%)} = \text{slurry viscosity of sample after being left at rest at 23°C for 240 hours / initial slurry viscosity of sample before storage} \times 100,$$

provided that the slurry viscosity of the sample after being left at rest at 23°C for 240 hours is a slurry viscosity obtained by leaving the cellulose fiber-containing material at 23°C for 240 hours, then processing the cellulose fiber-containing material into a slurry having a solid concentration of 0.4% by mass, and then measuring the viscosity under conditions of 25°C and a rotation number of 3 rpm, whereas the initial slurry viscosity of the sample before storage is a slurry viscosity obtained by processing the cellulose fiber-containing material into a slurry having a solid concentration of 0.4% by mass, and then measuring the viscosity under conditions of 25°C and a rotation number of 3 rpm.
[7] A method for producing a cellulose fiber-containing material, comprising, in the following order,
obtaining a dispersion comprising cellulose fibers having a fiber width of 1000 nm or less,
adding a di- or more-valent metal component to the dispersion,
adding an acid, and
adjusting pH, wherein
the adjusting pH is performing adjustment pH, so that when the cellulose fiber-containing material is processed into a slurry having a solid concentration of 0.5% by mass, the pH of the slurry can be 4 or more.
[8] The method for producing a cellulose fiber-containing material according to [7], wherein
the adding a di- or more-valent metal component further comprises a filtering after completion of the addition of the di- or more-valent metal component, and
the adding an acid further comprises a filtering after completion of the addition of an acid.
[9] The method for producing a cellulose fiber-containing material according to [7] or [8], which further comprises a pulverization after completion of the adding an acid.

Advantageous Effects of Invention

According to the present invention, an ultrafine cellulose fiber-containing material having favorable re-dispersibility can be obtained. In addition, according to the present invention, the ultrafine cellulose fiber-containing material can exhibit excellent thickening properties after it has been re-dispersed, even after long-term storage.

Brief Description of Drawings

Figure 1 is a graph showing the relationship between the amount of NaOH added dropwise to a fiber raw material and the electrical conductivity.
Figure 2 is a flow chart explaining a step of producing the cellulose fiber-containing material of the present invention.

Embodiments of Carrying out the Invention

Hereinafter, the present invention will be described in detail. The below-mentioned constituent features will be explained based on representative embodiments or specific examples in some cases. However, the present invention is not limited to such embodiments.

(Cellulose fiber-containing material)

The present invention relates to a cellulose fiber-containing material comprising cellulose fibers having a fiber width of 1000 nm or less (hereinafter also referred to as "ultrafine cellulose fibers") and a di- or more-valent metal component. The content of cellulose fibers in the cellulose fiber-containing material is 5% by mass or more, with respect to the total mass of the cellulose fiber-containing material. The content of the metal component is 0.5% by mass or less, with respect to the total mass of the cellulose fiber-containing material. Moreover, when the cellulose fiber-containing material is processed into a slurry having a solid concentration of 0.5% by mass, the pH of the slurry is 4 or more. Since the cellulose fiber-containing material of the present invention comprises ultrafine cellulose fibers in an amount of 5% by mass or more, it can also be referred to as an "ultrafine cellulose fiber condensate" or an "ultrafine cellulose fiber aggregate."

Since the cellulose fiber-containing material of the present invention has the above-described configuration, it can exhibit favorable re-dispersibility. Specifically, the cellulose fiber-containing material of the present invention can exhibit excellent thickening properties, after it has been dispersed in a solvent such as water. The fact that a re-dispersion has a certain level of viscosity means a cellulose fiber-containing material has favorable re-dispersibility. Moreover, a re-dispersion of a cellulose fiber-containing material having favorable re-dispersibility tends to have a small haze, and thus, a highly transparent re-dispersion can be obtained.

In the present invention, when the cellulose fiber-containing material is processed into a slurry having a solid concentration of 0.5% by mass, the pH of the slurry is adjusted to pH 4 or more, so that the counter ions $H^+$ present on the surface of cellulose fibers can be replaced with, for example, counter ions such as alkali-derived $Na^+$ or $K^+$. Thereby, it is considered that electrostatic repulsion among cellulose fibers can be enhanced, and that the re-dispersibility of the cellulose fiber-containing material can be improved.

Furthermore, the cellulose fiber-containing material of the present invention can exhibit excellent thickening properties after it has been re-dispersed, even after long-term storage. That is to say, the cellulose fiber-containing material of the present invention is excellent in terms of long-term storage properties, and thus, even after long-term storage, it can exhibit a certain level of viscosity. Further, the present invention is also characterized in terms of a small increase in the haze of a re-dispersion of the cellulose fiber-containing material even after long-term storage. Since the cellulose fiber-containing material of the present invention has favorable re-dispersibility even after long-term storage, the transparency of a re-dispersion can be maintained.

In the present invention, when the cellulose fiber-containing material is processed into a slurry having a solid concentration of 0.5% by mass, the pH of the slurry is adjusted to pH 4 or more, so that the hydrolysis of cellulose fibers by an acid is assumed to be suppressed. Thereby, it is considered that the long-term storage properties of the cellulose fiber-containing material can be enhanced.

The form of the cellulose fiber-containing material is not particularly limited, but it can be present in various forms such as, for example, a solid, gel, or a liquid. Among others, the cellulose fiber-containing material is preferably a solid or gel, and is more preferably a solid. The cellulose fiber-containing material is further preferably a particulate. Herein, the particulate is a powdery and/or granular substance. In this regard, a powdery substance means a substance smaller than a granular substance. In general, a powdery substance refers to fine particles having a particle diameter

of 1 nm or larger and smaller than 0.1 mm, and a granular substance is a particle having a particle diameter of 0.1 mm or larger and 10 mm or smaller. Besides, in the broad sense, since gel is said to be a form of a solid, it is classified in a solid in some cases.

The content of cellulose fibers may be 5% by mass or more, more preferably 7.5% by mass or more, and further preferably 10% by mass or more, with respect to the total mass of the cellulose fiber-containing material. In addition, the upper limit value of the content of cellulose fibers is not particularly limited, but it can be set at, for example, 95% by mass. Since cellulose fibers are present in a high concentration in the cellulose fiber-containing material of the present invention and are in a condensed form, storage costs or transport costs can be reduced. Moreover, the cellulose fiber-containing material is used, for example, as a thickener or a raw material for composition, the amount of water incorporated therein may be reduced. Furthermore, by setting the content of the cellulose fiber-containing material within the above-described range, the stability of cellulose fibers in the cellulose fiber-containing material can also be enhanced.

When the content of cellulose fibers is in the range of 5% by mass or more and less than 10% by mass with respect to the total mass of the cellulose fiber-containing material, in general, the cellulose fiber-containing material is in a gelatinous state. On the other hand, when the content of cellulose fibers is 10% by mass or more with respect to the total mass of the cellulose fiber-containing material, the cellulose fiber-containing material is in a solid state.

When the cellulose fiber-containing material of the present invention is processed in a slurry having a solid concentration of 0.5% by mass, the pH of the slurry is 4 or more. The pH of the slurry having a solid concentration of 0.5% by mass is preferably 4.5 or more, more preferably 5.0 or more, and further preferably 6.0 or more. On the other hand, the pH of the slurry having a solid concentration of 0.5% by mass is preferably 13 or less, more preferably 12 or less, and further preferably 11 or less. By setting the pH of the slurry having a solid concentration of 0.5% by mass within the above-described range, the long-term storage stability of the cellulose fiber-containing material can be enhanced. Specifically, the viscosity retention percentage of a slurry of the cellulose fiber-containing material can be maintained at a certain value or more, even after the cellulose fiber-containing material has been stored for a long period of time.

The pH of the slurry having a solid concentration of 0.5% by mass is measured, after the ultrafine cellulose fiber-containing material has been added to ion exchange water to prepare a slurry having a solid concentration of 0.5% by mass, the slurry has been then stirred with a magnetic stirrer, so that the entire slurry has been blended. The pH displayed on an apparatus is read, after 5 or more minutes have been passed after initiation of the stirring with the magnetic stirrer. The temperature upon the measurement is set at 23°C. As an apparatus for measuring the pH, a known measurement apparatus can be used.

Herein, the viscosity retention percentage of a slurry of the cellulose fiber-containing material having a solid concentration of 0.5% by mass is defined according to the following equation:

$$\text{Viscosity retention percentage (\%)} = \text{slurry viscosity of sample after being left at rest at 23°C for 240 hours / initial slurry viscosity of sample before storage} \times 100,$$

provided that the slurry viscosity of the sample after being left at rest at 23°C for 240 hours is a slurry viscosity obtained by leaving the cellulose fiber-containing material at 23°C for 240 hours, then processing the cellulose fiber-containing material into a slurry having a solid concentration of 0.4% by mass, and then measuring the viscosity under conditions of 25°C, a rotation number of 3 rpm and the measurement time of 3 minutes, whereas the initial slurry viscosity of the sample before storage is a slurry viscosity obtained by processing the cellulose fiber-containing material into a slurry having a solid concentration of 0.4% by mass, and then measuring the viscosity under conditions of 25°C, a rotation number of 3 rpm and the measurement time of 3 minutes. For the measurement of viscosity, a type B viscometer (No. 4 roter) (manufactured by BROOKFIELD; analog viscometer T-LVT) can be used.

The viscosity retention percentage (%) calculated according to the above equation is preferably 10% or more, more preferably 20% or more, even more preferably 30% or more, further preferably 42% or more, particularly preferably 50% or more, and most preferably 60% or more. Besides, the viscosity retention percentage (%) may be 100%, and may also exceed 100%.

The initial slurry viscosity is preferably 3000 mPa·s or more, more preferably 4000 mPa·s or more, further preferably 5000 mPa.s or more, particularly preferably 7000 mPa·s or more, and most preferably 8000 mPa·s or more. It is to be noted that the initial slurry viscosity is the viscosity of the cellulose fiber-containing material before the storage thereof, and specifically, it is a viscosity measured within 20 hours after the cellulose fiber-containing material has been produced and has been then left at room temperature.

When the cellulose fiber-containing material is processed into a slurry having a solid concentration of 0.2% by mass, the haze of the slurry is preferably 5.0% or less, more preferably 4.0% or less, further preferably 3.0% or less, and particularly preferably 2.5% or less. The haze of the slurry having a solid concentration of 0.2% by mass can be measured in accordance with JIS K 7136, using a glass cell having an optical path length of 1 cm. The haze value can be measured using a hazemeter (manufactured by MURAKAMI COLOR RESEARCH LABORATORY Co., Ltd.; HM-150). As such a glass cell having an optical path length of 1 cm, for example, a glass cell for liquid having an optical path length of 1 cm (manufactured by Fujiwara Scientific Co., Ltd.; MG-40; inverse optical path) can be used. The zero point is measured with ion exchange water which is placed in the glass cell. It is to be noted that the above-described haze value is a haze value before the storage of the cellulose fiber-containing material, and in the present description, it may be referred to as an "initial haze" at times. It is to be noted that the initial haze is a haze measured within 20 hours after the cellulose fiber-containing material has been produced and has been then left at room temperature.

The haze increasing percentage after long-term storage is preferably 300% or less, more preferably 150% or less, further preferably 100% or less, and particularly preferably 50% or less. The haze increasing percentage may be 0%. Herein, the haze increasing percentage of a slurry of the cellulose fiber-containing material having a solid concentration of 0.2% by mass is defined according to the following equation:

Haze increasing percentage (%) = (haze of slurry of sample after being left at rest at 23°C for 240 hours - initial haze of slurry of sample before storage) / initial haze of slurry of sample before storage x 100.

Herein, the haze of a slurry of a sample after being left at rest at 23°C for 240 hours is a haze value obtained by leaving the cellulose fiber-containing material at 23°C for 240 hours, then processing the cellulose fiber-containing material into a slurry having a solid concentration of 0.2% by mass, and then measuring the haze using a glass cell having an optical path length of 1 cm in accordance with JIS K 7136. On the other hand, the initial haze of a slurry of a sample before storage is a haze value obtained by processing the cellulose fiber-containing material into a slurry having a solid concentration of 0.2% by mass, and then measuring the haze using a glass cell having an optical path length of 1 cm in accordance with JIS K 7136. As an apparatus for measuring the haze, a hazemeter (manufactured by MURAKAMI COLOR RESEARCH LABORATORY Co., Ltd.; HM-150) can be used.

(Cellulose fibers)

The cellulose fiber-containing composition of the present invention comprises cellulose fibers having a fiber width of 1000 nm or less (ultrafine cellulose fibers). The ultrafine cellulose fibers are preferably fibers having an ionic functional group, and in this case, the ionic functional group is preferably an anionic functional group (hereinafter also referred to as an "anionic group"). The anionic group is preferably at least one selected from, for example, a phosphoric acid group or a phosphoric acid group-derived substituent (which is simply referred to as a "phosphoric acid group" at times), a carboxyl group or a carboxyl group-derived substituent (which is simply referred to as a "carboxyl group" at times), and a sulfone group or a sulfone group-derived substituent (which is simply referred to as a "sulfone group" at times); is more preferably at least one selected from a phosphoric acid group and a carboxyl group; and is particularly preferably a phosphoric acid group. In the present description, cellulose fibers having a phosphoric acid group are also referred to as "phosphorylated ultrafine cellulose fibers," at times.

Although there is no particular restriction on a cellulose fiber raw material for obtaining ultrafine cellulose fibers, pulp is preferably used from the viewpoint of availability and inexpensiveness. Examples of the pulp include wood pulp, non-wood pulp, and deinked pulp. Examples of the wood pulp include chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP). Further, included are, but not particularly limited to, semichemical pulps such as semi-chemical pulp (SCP) and chemi-ground wood pulp (CGP); and mechanical pulps such as ground pulp (GP) and thermomechanical pulp (TMP, BCTMP). Examples of the non-wood pulp include, but not particularly limited to, cotton pulps such as cotton linter and cotton lint; non-wood type pulps such as hemp, wheat straw, and bagasse; and cellulose isolated from ascidian, seaweed, etc., chitin, and chitosan. As a deinked pulp, there is deinked pulp using waste paper as a raw material, but it is not particularly limited thereto. The pulp of the present embodiment may be used singly, or in combination of two or more types. Among the above-listed pulp types, wood pulp and deinked pulp including cellulose are preferable from the viewpoint of easy availability. Among wood pulps, chemical pulp is preferable because it has a higher cellulose content to enhance the yield of ultrafine cellulose fibers and decomposition of cellulose in the pulp is mild at the time of ultrafine fiber formation (defibration) to yield ultrafine cellulose fibers having a long fiber length with a high aspect ratio. Among them, kraft pulp and sulfite pulp are most preferably selected. A sheet containing the ultrafine cellulose fibers having a long fiber length with a high aspect ratio tends to exhibit a high strength.

The average fiber width of ultrafine cellulose fibers is 1000 nm or less as observed with an electron microscope. The average fiber width is preferably 2 nm or more and 1000 nm or less, more preferably 2 nm or more and 100 nm or less, even more preferably 2 nm or more and 50 nm or less, and further preferably 2 nm or more and 10 nm or less, but is not particularly limited thereto. When the average fiber width of ultrafine cellulose fibers is less than 2 nm, since they

are dissolved in water as cellulose molecules, there appears tendency that the physical properties (strength, rigidity, and dimensional stability) as an ultrafine cellulose fiber are not expressed sufficiently. The ultrafine cellulose fiber is, for example, monofilament cellulose having a fiber width of 1000 nm or less.

The measurement of a fiber width of an ultrafine cellulose fiber by electron microscopic observation is carried out as follows. An aqueous suspension of ultrafine cellulose fibers having a concentration of 0.05% by mass or more and 0.1% by mass or less is prepared, and the suspension is casted onto a hydrophilized carbon film-coated grid as a sample for TEM observation. If the sample contains wide fibers, SEM images of the surface of the suspension casted onto glass may be observed. The sample is observed using electron microscope images taken at a magnification of 1000x, 5000x, 10000x, or 50000x according to the widths of the constituent fibers. However, the sample, the observation conditions, and the magnification are adjusted so as to satisfy the following conditions:

(1) A single straight line X is drawn in any given portion in an observation image, and 20 or more fibers intersect with the straight line X.

(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. 3 or more sets of images of surface portions, which are at least not overlapped, are thus observed, and the widths of the fibers intersecting the straight line X and the straight line Y are read in the each image. At least 120 fiber widths (20 fibers $\times$ 2 $\times$ 3 = 120) are thus read. The average fiber width (which is simply referred to as a "fiber width" at times) of ultrafine cellulose fibers is an average value of the fiber widths thus read.

The fiber length of the ultrafine cellulose fibers is not particularly limited, and it is preferably 0.1 $\mu$m or more and 1000 $\mu$m or less, more preferably 0.1 $\mu$m or more and 800 $\mu$m or less, and particularly preferably 0.1 $\mu$m or more and 600 $\mu$m or less. By setting the fiber length within the above-described range, destruction of the crystalline region of the ultrafine cellulose fibers can be suppressed, and the slurry viscosity of the ultrafine cellulose fibers can also be set within an appropriate range. It is to be noted that the fiber length of the ultrafine cellulose fibers can be obtained by an image analysis using TEM, SEM or AFM.

The ultrafine cellulose fibers preferably have a type I crystal structure. In this regard, the fact that ultrafine cellulose fibers have a type I crystal structure may be identified by a diffraction profile obtained from a wide angle X-ray diffraction photograph using CuK$\alpha$ ($\lambda$ = 1.5418 Å) monochromatized with graphite. Specifically, it may be identified based on the fact that there are typical peaks at two positions near $2\theta$ = 14° or more and 17° or less, and near $2\theta$ = 22° or more and 23° or less.

The percentage of the type I crystal structure occupied in the ultrafine cellulose fibers is preferably 30% or more, more preferably 50% or more, and further preferably 70% or more. In this case, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The ultrafine cellulose fibers preferably have phosphoric acid groups or substituents derived from the phosphoric acid group. The phosphoric acid group is a divalent functional group corresponding to a phosphoric acid from which a hydroxyl group is removed. Specifically, it is a group represented by -PO3H2. The substituents derived from the phosphoric acid group include substituents, such as condensation-polymerized phosphoric acid groups, salts of phosphoric acid groups, and phosphoric acid ester groups, and they may be either ionic substituents or nonionic substituents.

In the present invention, the phosphoric acid group or the substituent derived from the phosphoric acid group may be a substituent represented by the following Formula (1):

[Formula 1]

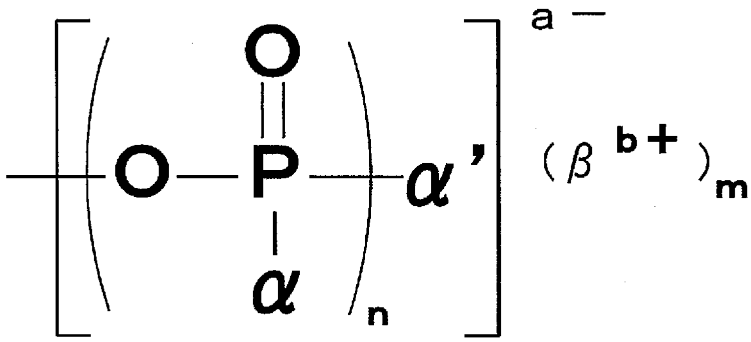

(1)

In the Formula (1), a, b, m and n each independently represent an integral number (provided that a = b x m); $\alpha$ and $\alpha'$ each independently represent R or OR. R is a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an aromatic group, or a derivative group thereof; and $\beta$ is a monovalent or higher valent cation consisting of organic matter or inorganic matter.

< Phosphoric acid group introduction step >

The phosphoric acid group introduction step may be performed by allowing at least one selected from a compound having phosphoric acid groups and salts thereof (hereinafter, referred to as a "phosphorylating reagent" or "Compound A") to react with the fiber raw material including cellulose. Such a phosphorylating reagent may be mixed into the fiber raw material in a dry or wet state, in the form of a powder or an aqueous solution. In another example, a powder or an aqueous solution of the phosphorylating reagent may be added into a slurry of the fiber raw material.

The phosphoric acid group introduction step may be performed by allowing at least one selected from a compound having phosphoric acid groups and salts thereof (a phosphorylating reagent or Compound A) to react with the fiber raw material including cellulose. It is to be noted that this reaction may be performed in the presence of at least one selected from urea and derivatives thereof (hereinafter, referred to as "Compound B").

One example of the method of allowing Compound A to act on the fiber raw material in the presence of Compound B includes a method of mixing the fiber raw material in a dry or wet state with a powder or an aqueous solution of Compound A and Compound B. Another example thereof includes a method of adding a powder or an aqueous solution of Compound A and Compound B to a slurry of the fiber raw material. Among them, a method of adding an aqueous solution of Compound A and Compound B to the fiber raw material in a dry state, or a method of adding a powder or an aqueous solution of Compound A and Compound B to the fiber raw material in a wet state is preferable because of the high homogeneity of the reaction. Compound A and Compound B may be added at the same time or may be added separately. Alternatively, Compound A and Compound B to be subjected to the reaction may be first added as an aqueous solution, which may be then compressed to squeeze out redundant chemicals. The form of the fiber raw material is preferably a cotton-like or thin sheet form, but the form is not particularly limited thereto.

The Compound A used in the present embodiment is at least one selected from a compound having a phosphoric acid group and a salt thereof.

Examples of the compound having a phosphoric acid group include, but are not particularly limited to, phosphoric acid, lithium salts of phosphoric acid, sodium salts of phosphoric acid, potassium salts of phosphoric acid, and ammonium salts of phosphoric acid. Examples of the lithium salts of phosphoric acid include lithium dihydrogen phosphate, dilithium hydrogen phosphate, trilithium phosphate, lithium pyrophosphate, and lithium polyphosphate. Examples of the sodium salts of phosphoric acid include sodium dihydrogen phosphate, disodium hydrogen phosphate, trisodium phosphate, sodium pyrophosphate, and sodium polyphosphate. Examples of the potassium salts of phosphoric acid include potassium dihydrogen phosphate, dipotassium hydrogen phosphate, tripotassium phosphate, potassium pyrophosphate, and potassium polyphosphate. Examples of the ammonium salts of phosphoric acid include ammonium dihydrogen phosphate, diammonium hydrogen phosphate, triammonium phosphate, ammonium pyrophosphate, and ammonium polyphosphate.

Among them, from the viewpoints of high efficiency in introduction of the phosphoric acid group, an improving tendency of the defibration efficiency in a defibration step described below, low cost, and industrial applicability, phosphoric acid, sodium phosphate, potassium phosphate, and ammonium phosphate are preferable. Sodium dihydrogen phosphate, or disodium hydrogen phosphate is more preferable.

Further, since the uniformity of the reaction is improved and the efficiency in introduction of a phosphoric acid group is enhanced, the Compound A is preferably used as an aqueous solution. Although there is no particular restriction on the pH of an aqueous solution of the Compound A, the pH is preferably pH 7 or less because the efficiency in introduction of a phosphoric acid group is high, and more preferably pH 3 or more and pH 7 or less from the viewpoint of suppression of hydrolysis of a pulp fiber. The pH of an aqueous solution of the Compound A may be adjusted, for example, by using, among compounds having a phosphoric acid group, a combination of an acidic one and an alkaline one, and changing the amount ratio thereof. The pH of an aqueous solution of Compound A may also be adjusted by adding an inorganic alkali or an organic alkali to an acidic compound among compounds having a phosphoric acid group.

Although there is no particular restriction on the amount of the Compound A added to a fiber raw material, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and most preferably 2% by mass or more and 30% by mass or less. When the amount of phosphorus atoms added to the fiber raw material is within the above-described range, the yield of ultrafine cellulose fibers can be further improved. On the other hand, by setting the amount of phosphorus atoms added to the fiber raw material at 100% by mass or less, the cost of the used Compound A can be suppressed, while enhancing phosphorylation efficiency.

Examples of the Compound B used in the present embodiment include urea, biuret, 1-phenyl urea, 1-benzyl urea, 1-methyl urea, 1-ethyl urea and the like.

The Compound B is preferably used as an aqueous solution, as with the Compound A. Further, an aqueous solution in which both the Compound A and Compound B are dissolved is preferably used, because the uniformity of a reaction may be enhanced. The amount of the Compound B added to a fiber raw material (absolute dry mass) is preferably 1% by mass or more and 500% by mass or less, more preferably 10% by mass or more and 400% by mass or less, further preferably 100% by mass or more and 350% by mass or less, and particularly preferably 150% by mass or more and 300% by mass or less.

The reaction system may contain an amide or an amine, in addition to the Compound A and the Compound B. Examples of the amide include formamide, dimethylformamide, acetamide, and dimethylacetamide. Examples of the amine include methylamine, ethylamine, trimethylamine, triethylamine, monoethanolamine, diethanolamine, triethanolamine, pyridine, ethylenediamine, and hexamethylenediamine. Among them, particularly, triethylamine is known to work as a favorable reaction catalyst.

In the phosphoric acid group introduction step, it is preferable to perform a heat treatment. For the temperature of such a heat treatment, it is preferable to select a temperature that allows an efficient introduction of phosphoric acid groups while suppressing the thermal decomposition or hydrolysis reaction of fibers. Specifically, the temperature is preferably 50°C or higher and 300°C or lower, more preferably 100°C or higher and 250°C or lower, and further preferably 130°C or higher and 200°C or lower. In addition, a vacuum dryer, an infrared heating device, or a microwave heating device may be used for heating.

Upon the heat treatment, if the time for leaving the fiber raw material to stand still gets longer while the fiber raw material slurry to which the Compound A is added contains water, as drying advances, water molecules and the Compound A dissolved therein move to the surface of the fiber raw material. As such, there is a possibility of the occurrence of unevenness in the concentration of the Compound A in the fiber raw material, and the introduction of phosphoric acid groups to the fiber surface may not progress uniformly. In order to suppress the occurrence of unevenness in the concentration of the Compound A in the fiber raw material due to drying, the fiber raw material in the shape of a very thin sheet may be used, or a method of heat-drying or vacuum-drying the fiber raw material, while kneading or stirring with the Compound A using a kneader or the like, may be employed.

As a heating device used for heat treatment, a device capable of always discharging moisture retained by slurry or moisture generated by an addition reaction of phosphoric acid groups with hydroxy groups of the fiber to the outside of the device system is preferable, and for example, forced convection ovens or the like are preferable. By always discharging moisture in the device system, in addition to being able to suppress a hydrolysis reaction of phosphoric acid ester bonds, which is a reverse reaction of the phosphoric acid esterification, acid hydrolysis of sugar chains in the fiber may be suppressed as well, and ultrafine fibers with a high axial ratio can be obtained.

The time for heat treatment is, although affected by the heating temperature, preferably 1 second or more and 300 minutes or less, more preferably 1 second or more and 1000 seconds or less, and further preferably 10 seconds or more and 800 seconds or less, after moisture is substantially removed from the fiber raw material slurry. In the present invention, by setting the heating temperature and heating time within an appropriate range, the amount of phosphoric acid groups introduced can be set within a preferred range.

The amount of phosphoric acid groups introduced is, per 1 g (mass) of the ultrafine cellulose fibers, preferably 0.1 mmol/g or more and 3.65 mmol/g or less, more preferably 0.14 mmol/g or more and 3.5 mmol/g or less, even more preferably 0.2 mmol/g or more and 3.2 mmol/g or less, particularly preferably 0.4 mmol/g or more and 3.0 mmol/g or less, and most preferably 0.6 mmol/g or more and 2.5 mmol/g or less. By setting the amount of phosphoric acid groups

introduced within the above-described range, it may become easy to perform fibrillation on the fiber raw material, and the stability of the ultrafine cellulose fibers can be enhanced. In addition, by setting the amount of phosphoric acid groups introduced within the above-described range, it becomes possible to keep the hydrogen bond between ultrafine cellulose fibers, while facilitating fibrillation, and thus, the sheet is anticipated to have favorable strength.

The amount of phosphoric acid groups introduced into a fiber raw material may be measured by a conductometric titration method. Specifically, the amount introduced may be measured by performing fibrillation on ultrafine fibers in a defibration treatment step, treating the resulting slurry comprising ultrafine cellulose fibers with an ion exchange resin, and then examining a change in the electrical conductivity while adding an aqueous sodium hydroxide solution.

The conductometric titration confers a curve shown in Figure 1 as an alkali is added. First, the electrical conductivity is rapidly reduced (hereinafter, this region is referred to as a "first region"). Then, the conductivity starts rising slightly (hereinafter, this region is referred to as a "second region"). Then, the increment of the conductivity is increased (hereinafter, this region is referred to as a "third region"). The boundary point between the second region and the third region is defined as a point at which a change amount in the two differential values of conductivity, namely, an increase in the conductivity (inclination) becomes maximum. In short, three regions appear. Among them, the amount of the alkali required for the first region among these regions is equal to the amount of a strongly acidic group in the slurry used in the titration, and the amount of the alkali required for the second region is equal to the amount of a weakly acidic group in the slurry used in the titration. When condensation of a phosphoric acid group occurs, the weakly acidic group is apparently lost, so that the amount of the alkali required for the second region is decreased as compared with the amount of the alkali required for the first region. On the other hand, the amount of the strongly acidic group agrees with the amount of the phosphorus atom regardless of the presence or absence of condensation. Therefore, the simple term "the amount of the phosphoric acid group introduced (or the amount of the phosphoric acid group)" or "the amount of the substituent introduced (or the amount of the substituent)" refers to the amount of the strongly acidic group. That is to say, the amount (mmol) of the alkali required for the first region in the curve shown in Figure 1 is divided by the solid content (g) in the slurry as a titration target to obtain the amount (mmol/g) of the substituent introduced.

The phosphoric acid group introduction step may be performed at least once, but may be repeated multiple times as well. This case is preferable, since more phosphoric acid groups are introduced.

< Introduction of carboxyl group >

In the present invention, when the ultrafine cellulose fibers have carboxyl groups, such carboxyl groups can be introduced into the ultrafine cellulose fibers, for example, by performing an oxidation treatment such as a TEMPO oxidation treatment on the fiber raw material, or by treating the ultrafine cellulose fibers with a compound having groups derived from carboxylic acid, a derivative thereof, or an acid anhydride thereof or a derivative thereof.

Examples of the compound having a carboxyl group include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid.

Examples of the acid anhydride of the compound having a carboxyl group include, but are not particularly limited to, acid anhydrides of dicarboxylic acid compounds, such as maleic anhydride, succinic anhydride, phthalic anhydride, glutaric anhydride, adipic anhydride, or itaconic anhydride.

Examples of the derivative of the compound having a carboxyl group include, but are not particularly limited to, an imidized product of the acid anhydride of the compound having a carboxyl group and a derivative of the acid anhydride of the compound having a carboxyl group. Examples of the imidized product of the acid anhydride of the compound having a carboxyl group include, but are not particularly limited to, imidized products of dicarboxylic acid compounds, such as maleimide, succinimide or phthalimide.

The derivative of the acid anhydride of the compound having a carboxyl group is not particularly limited. Examples include acid anhydrides of the compounds having a carboxyl group, in which at least some hydrogen atoms are substituted with substituents (for example, an alkyl group, a phenyl group, etc.), such as dimethylmaleic anhydride, diethylmaleic anhydride, or diphenylmaleic anhydride

The amount of carboxyl groups introduced is, per 1 g (mass) of the ultrafine cellulose fibers, preferably 0.1 mmol/g or more and 3.65 mmol/g or less, more preferably 0.14 mmol/g or more and 3.5 mmol/g or less, further preferably 0.2 mmol/g or more and 3.2 mmol/g or less, particularly preferably 0.4 mmol/g or more and 3.0 mmol/g or less, and most preferably 0.6 mmol/g or more and 2.5 mmol/g or less.

< Alkali treatment >

When ultrafine cellulose fibers are produced, an alkali treatment may be conducted between an ionic functional group introduction step and a defibration treatment step described below. The method of the alkali treatment is not particularly limited. For example, a method of immersing functional group-introduced fibers in an alkaline solution may

be applied.

The alkali compound contained in the alkaline solution is not particularly limited, but it may be an inorganic alkaline compound or an organic alkali compound. The solvent of the alkaline solution may be either water or an organic solvent. The solvent is preferably a polar solvent (water, or a polar organic solvent such as alcohol), and more preferably an aqueous solvent containing at least water.

Among alkaline solutions, a sodium hydroxide aqueous solution, or a potassium hydroxide aqueous solution is particularly preferable, because of high versatility.

The temperature of the alkali solution in the alkali treatment step is not particularly limited, but it is preferably 5°C or higher and 80°C or lower, and more preferably 10°C or higher and 60°C or lower.

The immersion time in the alkali solution in the alkali treatment step is not particularly limited, but it is preferably 5 minutes or more and 30 minutes or less, and more preferably 10 minutes or more and 20 minutes or less.

The amount of the alkali solution used in the alkali treatment is not particularly limited, but it is preferably 100% by mass or more and 100000% by mass or less, and more preferably 1000% by mass and 10000% by mass or less, with respect to the absolute dry mass of the phosphoric acid group-introduced fibers.

In order to reduce the consumption of an alkaline solution in the alkali treatment step, functional group-introduced fibers may be washed with water or an organic solvent before the alkali treatment step. After the alkali treatment, the alkali-treated functional group-introduced fibers are preferably washed with water or an organic solvent before the defibration treatment step in order to improve the handling property.

< Defibration treatment >

The ionic functional group-introduced fibers are subjected to a defibration treatment in a defibration treatment step. In the defibration treatment step, fibers are defibrated usually using a defibration treatment apparatus to yield a slurry comprising ultrafine cellulose fibers, and there is no particular restriction on a treatment apparatus, or a treatment method.

A high-speed defibrator, a grinder (stone mill-type crusher), a high-pressure homogenizer, an ultrahigh-pressure homogenizer, a high-pressure collision-type crusher, a ball mill, a bead mill, or the like can be used as the defibration treatment apparatus. Alternatively, for example, a wet milling apparatus such as a disc-type refiner, a conical refiner, a twin-screw kneader, an oscillation mill, a homomixer under high-speed rotation, an ultrasonic disperser, or a beater may also be used as the defibration treatment apparatus. The defibration treatment apparatus is not limited to the above. Examples of a preferred defibration treatment method include a high-speed defibrator, a high-pressure homogenizer, and an ultrahigh-pressure homogenizer, which are less affected by milling media, and are free from apprehension of contamination.

Upon the defibration treatment, the fiber raw material is preferably diluted with water and an organic solvent each alone or in combination, to prepare a slurry, though the method is not particularly limited thereto. Water as well as a polar organic solvent can be used as a dispersion medium. Preferred examples of the polar organic solvent include, but are not particularly limited to, alcohols, ketones, ethers, dimethyl sulfoxide (DMSO), dimethylformamide (DMF), and dimethylacetamide (DMAc). Examples of the alcohols include methanol, ethanol, n-propanol, isopropanol, n-butanol, and t-butyl alcohol. Examples of the ketones include acetone and methyl ethyl ketone (MEK). Examples of the ethers include diethyl ether and tetrahydrofuran (THF). One of these dispersion media may be used, or two or more thereof may be used. The dispersion medium may also contain a solid content other than the fiber raw material, for example, hydrogen-binding urea.

With regard to the ultrafine cellulose fibers, the ultrafine cellulose fiber-containing slurry obtained by the defibration treatment may be once concentrated and/or dried, and then, may be subjected to a defibration treatment again. In this case, there is no particular restriction on the method of concentration and drying, but examples thereof include a method in which a concentrating agent is added into a slurry comprising ultrafine cellulose fibers, and a method using a dehydrator, a press, a dryer, and the like used generally. Further, publicly known methods, for example as described in WO 2014/024876, WO 2012/107642, and WO 2013/121086, may be used. Also, the ultrafine cellulose fiber-containing slurry may be formed into a sheet, so that it is concentrated and dried. The formed sheet is subjected to a defibration treatment, so that an ultrafine cellulose fiber-containing slurry can be obtained again.

Examples of a device used for defibrating (pulverizing) the ultrafine cellulose fiber-containing slurry again, after the concentration and/or drying of the ultrafine cellulose fiber-containing slurry, include, but are not particularly limited to, a high-speed defibrator, a grinder (stone mill-type grinder), a high-pressure homogenizer, an ultra-high pressure homogenizer, a high-pressure collision type crusher, a ball mill, a bead mill, a disk type refiner, a conical refiner, a twin screw kneader, a vibrating mill, and a device for wet milling, such as a high-speed rotating homomixer, an ultrasonic disperser, or a beater.

(Metal component)

The cellulose fiber-containing material of the present invention comprises a di- or more-valent metal component. The di- or more-valent metal component is a component that is added as a metal salt in an aggregation step in the after-mentioned step of producing the cellulose fiber-containing material. Since such a metal salt acts to aggregate ultrafine cellulose fibers, it can also be referred to as a coagulant.

Examples of the metal salt containing a di- or more-valent metal component include aluminum sulfate ($Al_2(SO_4)_3$), aluminum chloride, aluminum polychloride, calcium chloride, magnesium chloride, calcium sulfate, magnesium sulfate, copper chloride, copper sulfate, iron chloride, iron sulfate, lead chloride, and lead sulfate. As such a metal salt containing a di- or more-valent metal component, only one type of the above-described salts may be added, or two or more types thereof may also be added. Among others, as such a metal salt containing a di- or more-valent metal component, at least one type selected from aluminum sulfate ($Al_2(SO4)_3$), aluminum chloride, aluminum polychloride, calcium chloride and calcium sulfate is preferably used, and at least one type selected from aluminum chloride and calcium chloride is more preferably used.

The content of the di- or more-valent metal component is 0.5% by mass or less with respect to the total mass of the cellulose fiber-containing material. The content of the metal component is preferably 0.3% by mass or less, more preferably 0.2% by mass or less, further preferably 0.15% by mass or less, and particularly preferably 0.1% by mass or less, with respect to the total mass of the cellulose fiber-containing material. Besides, the lower limit value of the content of the metal component is not particularly limited, but it can be set at, for example, 0.0001 % by mass.

The content of the di- or more-valent metal component in the cellulose fiber-containing material of the present invention can be quantified by ICP-AES measurement (inductively coupled plasma atomic emission spectrophotometry). When quantification is carried out by the ICP-AES measurement, first, 10 g of the ultrafine cellulose fiber-containing material is heated at 525°C for incineration. Then, the incinerated ultrafine cellulose fiber-containing material is dissolved in 5 mL of 1% nitric acid for wet decomposition. The thus obtained solution is adjusted to a constant volume of 50 mL, and is then filtrated through a 0.45-μm filter, and the obtained filtrate is used in the ICP-AES measurement.

In the present invention, the content of the di- or more-valent metal component is 0.5% by mass or less with respect to the total mass of the cellulose fiber-containing material, and thus, the di- or more-valent metal component is contained in a trace amount in the cellulose fiber-containing material. This means that the di- or more-valent metal component, which is added in the after-mentioned step of producing a cellulose fiber-containing material, is not completely removed, but remains in the cellulose fiber-containing material. In the step of producing a cellulose fiber-containing material, a di- or more-valent metal component is added into a dispersion containing cellulose fibers having a fiber width of 1000 nm or less, and thereafter, an acid is added therein, so that the di- or more-valent metal component is removed. However, in this case, the di- or more-valent metal component is not completely removed by addition of the acid, so that a trace amount of metal component is contained in the cellulose fiber-containing material as a final product.

(Surfactant)

Preferably, the cellulose fiber-containing material of the present invention further comprises a surfactant. In the present invention, it is considered that the surfactant acts to decrease surface tension, so as to facilitate the penetration of a pH adjuster that is added to adjust the pH of the cellulose fiber-containing material (i.e., the pH of a slurry having a solid concentration of 0.5% by mass) into the spaces among cellulose fibers. Specifically, the surfactant acts to facilitate the penetration of an alkali solution added in the after-mentioned pH adjustment step into the spaces among cellulose fibers. Hence, such a surfactant can be also referred to as a penetration aid.

The surfactant may be either an ionic surfactant or a nonionic surfactant. Examples of the ionic surfactant include an anionic surfactant, a nonionic surfactant, and an ampholytic surfactant. Among others, in the present invention, a nonionic surfactant is preferably used. When the ultrafine cellulose fiber-containing material comprises a nonionic surfactant, it can exhibit excellent thickening properties, after it has been re-dispersed, even after long-term storage.

Examples of the nonionic surfactant include polyoxyalkylene alkyl ether, polyglycerin fatty acid ester, glycerin monofatty acid ester, glycerin difatty acid ester, Pluronic, sorbitan fatty acid ester, polyoxyethylene sorbitan fatty acid ester, sucrose fatty acid ester, polyoxyethylene acyl ester, alkyl polyglycoside, fatty acid methyl glycoside ester, alkyl methyl glucamide, and fatty acid alkanolamide. Among these, polyoxyalkylene alkyl ether is preferably used.

Examples of the anionic surfactant include sodium oleate, potassium oleate, sodium laurate, sodium dodecylbenzenesulfonate, sodium alkylnaphthalenesulfonate, sodium dialkylsulfosuccinate, sodium polyoxyethylene alkyl ether sulfate, sodium polyoxyethylene alkyl allyl ether sulfate, sodium polyoxyethylene dialkyl sulfate, polyoxyethylene alkyl ether phosphoric acid ester, and polyoxyethylene alkyl allyl ether phosphoric acid ester. Among these, polyoxyethylene alkyl ether phosphoric acid ester is preferably used.

Examples of the cationic surfactant include: quaternary ammonium salts, such as alkyl trimethyl ammonium salt, dialkyl dimethyl ammonium salt, alkyl dimethyl benzyl ammonium salt, acylaminoethyldiethyl ammonium salt,

acylaminoethyldiethylamine salt, alkyl amidopropyl dimethyl benzyl ammonium salt, alkyl pyridinium salt, alkyl pyridinium sulfate, stearamide methyl pyridinium salt, alkyl quinolinium salt, alkyl isoquinolinium salt, fatty acid polyethylene polyamide, acylaminoethyl pyridinium salt, or acyl colaminoformyl methyl pyridinium salt; ester-bound amines or ether-bound quaternary ammonium salts, such as stearoxymethyl pyridinium salt, fatty acid triethanolamine, fatty acid triethanolamine formate, trioxyethylene fatty acid triethanolamine, cetyloxymethyl pyridinium salt, or p-isooctylphenoxyethoxy ethyl dimethyl benzyl ammonium salt; heterocyclic amines, such as alkyl imidazoline, 1-hydroxyethyl-2-alkyl imidazoline, 1-acetylaminoethyl-2-alkyl imidazoline, or 2-alkyl-4-methyl-4-hydroxymethyl oxazoline; and amine derivatives, such as polyoxyethylene alkyl amine, N-alkyl propylene diamine, N-alkyl polyethylene polyamine, N-alkyl polyethylene polyamine dimethyl sulfate, alkyl biguanide, or long chain amineoxide.

Examples of the ampholytic surfactant include lauryl dimethylamino acetic acid betaine, cocamide propyl betaine, lauramide propyl betaine, and sodium cocoamphoacetate.

The content of the surfactant is preferably 0.01% by mass or more, more preferably 0.05% by mass or more, and further preferably 0.1% by mass or more, with respect to the total mass of the cellulose fiber-containing material. On the other hand, the content of the surfactant is preferably 5% by mass or less, more preferably 3% by mass or less, and further preferably 2% by mass or less, with respect to the total mass of the cellulose fiber-containing material. By setting the content of the surfactant within the above-described range, the ultrafine cellulose fiber-containing material easily exhibits excellent thickening properties after it has been re-dispersed, even after long-term storage.

(Water-soluble organic compound)

Preferably, the cellulose fiber-containing material of the present invention further comprises a water-soluble organic compound. In the present invention, the water-soluble organic compound also works as a spacer that enters between ultrafine cellulose fibers adjacent to each other and thereby establishes a fine space between the ultrafine cellulose fibers. For this reason, the water-soluble organic compound can also be referred to as a "spacer molecule." In the cellulose fiber-containing material having such a spacer molecule, even in a case where water present among cellulose fibers is removed (desorption), aggregation of the cellulose fibers until they become a re-dispersion-impossible state is suppressed. Accordingly, the re-dispersibility of the cellulose fiber-containing material is further ameliorated, and the viscosity of the obtained re-dispersion is enhanced, so that the viscosity retention percentage tends to be further improved. In addition, the haze of the re-dispersion tends to be decreased.

The water-soluble organic compound is preferably nonvolatile. By using such a nonvolatile water-soluble organic compound, the loss of the water-soluble organic compound after it has entered between ultrafine cellulose fibers is suppressed, and the re-dispersibility of the cellulose fiber-containing material after long-term storage thereof can be further improved. Moreover, the viscosity or viscosity retention percentage of the re-dispersion can be enhanced. Herein, the nonvolatile water-soluble organic compound in the present description is, for example, a water-soluble organic compound having a boiling point of 100°C or higher.

The water-soluble organic compound has preferably at least one, more preferably two or more, and further preferably three or more groups contributing a hydrogen bond, in a single molecule thereof. Examples of the group contributing a hydrogen bond include groups such as -OH, -NH, -O-, =O, and =N-.

The value obtained by dividing the number of groups contributing a hydrogen bond in a single molecule of the water-soluble organic compound by the number of carbon atoms constituting a single molecule of the water-soluble organic compound is preferably 0.5 or more, more preferably 0.6 or more, and further preferably 0.7 or more. By using such a water-soluble organic compound, the re-dispersibility of the cellulose fiber-containing material can be further ameliorated. Moreover, the viscosity retention percentage of the cellulose fiber-containing material also tends to be improved.

The total atomic weight of a nitrogen atom (N), an oxygen atom (O), a sulfur atom (S) and a phosphorus atom (P) is preferably 25% or more, more preferably 30% or more, further preferably 40% or more, and particularly preferably 50% or more, with respect to the total molecular weight of the water-soluble organic compound. By setting the total atomic weight percentage of nitrogen, oxygen, sulfur and phosphorus within the above-described range, a cellulose fiber-containing material having excellent re-dispersibility is easily obtained. It is to be noted that the total atomic weight percentage of nitrogen, oxygen, sulfur and phosphorus can be calculated from the ratio of constitutional elements of the water-soluble organic compound, or calculated by elemental analysis.

Examples of the water-soluble organic compound include sugar, a water-soluble polymer, and urea. Specific examples of the water-soluble organic compound include trehalose, urea, polyethylene glycol (PEG), polyethylene oxide (PEO), carboxymethyl cellulose, and polyvinyl alcohol (PVA). In addition, other examples of the water-soluble organic compounds that can be used herein include an alkyl methacrylate-acrylic acid copolymer, polyvinyl pyrrolidone, sodium polyacrylate, propylene glycol, dipropylene glycol, polypropylene glycol, isoprene glycol, hexylene glycol, 1,3-butylene glycol, polyacrylamide, xanthan gum, guar gum, tamarind gum, carrageenan, locust bean gum, quince seed, alginic acid, pullulan, carrageenan, pectin, starches such as thionated starch, raw starch, oxidized starch, etherified starch,

esterified starch or amylose, glycerin, diglycerin, polyglycerin, hyaluronic acid, and metal salts of hyaluronic acid. Among others, the water-soluble organic compound is preferably at least one type selected from trehalose and urea, and particularly preferably, trehalose is used. By using trehalose as a water-soluble organic compound, the initial viscosity of a slurry of the cellulose fiber-containing material tends to be increased, and also, the cellulose fiber-containing material easily exhibits excellent thickening properties after it has been re-dispersed, even after long-term storage.

When a water-soluble polymer is used as a water-soluble organic compound, the viscosity-average molecular weight of the water-soluble polymer is preferably 100 or more, and more preferably 150 or more. On the other hand, the viscosity-average molecular weight of the water-soluble polymer is preferably 50000 or less, and more preferably 30000 or less.

The content of the water-soluble organic compound is preferably 0.1% by mass or more, more preferably 0.2% by mass or more, and further preferably 0.5% by mass or more, with respect to the total mass of the cellulose fiber-containing material. On the other hand, the content of the water-soluble organic compound is preferably 15% by mass or less, more preferably 10% by mass or less, and further preferably 5% by mass or less, with respect to the total mass of the cellulose fiber-containing material. By setting the content of the water-soluble organic compound within the above-described range, the initial viscosity of a slurry of the cellulose fiber-containing material tends to be increased. The cellulose fiber-containing material easily exhibits excellent thickening properties after it has been re-dispersed, even after long-term storage.

(Optional component)

The cellulose fiber-containing material of the present invention may comprise optional components other than the aforementioned components. Examples of such optional components may include antifoaming agents, lubricants, ultraviolet absorbing agents, dyes, pigments, stabilizers, alcohols, antiseptics, organic fine particles, inorganic fine particles, and resins. In addition, as such optical components, organic ions may also be added.

Another example of such an optional component may be a moisture absorbent. Examples of the moisture absorbent include silica gel, zeolite, alumina, sepiolite, calcium oxide, diatomaceous earth, activated carbon, activated clay, white carbon, calcium chloride, magnesium chloride, potassium acetate, disodium hydrogen phosphate, and sodium citrate.

(Method for producing cellulose fiber-containing material)

The present invention relates to a method for producing a cellulose fiber-containing material, comprising, in the following order, a step of obtaining a dispersion comprising cellulose fibers having a fiber width of 1000 nm or less, a step of adding a di- or more-valent metal component to the dispersion, an acid-adding step, and a pH adjustment step. In this method, the pH adjustment step is a step of adjusting pH, so that when the cellulose fiber-containing material is processed into a slurry having a solid concentration of 0.5% by mass, the pH of the slurry can be 4 or more.

The step of obtaining a dispersion comprising cellulose fibers having a fiber width of 1000 nm or less is a step that is described in detail in the above section (Cellulose fibers). The step of obtaining a dispersion comprising cellulose fibers having a fiber width of 1000 nm or less comprises a substituent introduction step, an alkali treatment step, and a defibration treatment step.

Figure 2 is a flow chart explaining the step of producing a cellulose fiber-containing material of the present invention. As shown in Figure 2, the method for producing a cellulose fiber-containing material of the present invention comprises, as a first step, a step of adding a metal component to an ultrafine cellulose fiber-containing dispersion. Since ultrafine cellulose fibers are aggregated by a metal component in this step, it is also referred to as an aggregation step.

In the step of adding a di- or more-valent metal component to the dispersion, a metal salt containing a di- or more-valent metal component is preferably added. Examples of the metal salt containing a di- or more-valent metal component include the aforementioned metal salts. In the step of adding a di- or more-valent metal component to the dispersion, the metal salt containing a di- or more-valent metal component is added in an amount of preferably 1 part by mass or more, and preferably 5 parts by mass or more, with respect to 100 parts by mass of the fine cellulose fibers contained in the dispersion. On the other hand, the metal salt containing a di- or more-valent metal component is added in an amount of preferably 100 parts by mass or less, and more preferably 50 parts by mass or less, with respect to 100 parts by mass of the fine cellulose fibers contained in the dispersion.

Preferably, the step of adding a metal component further comprises a filtration step after addition of a di- or more-valent metal component. Such a filtration step is established between the metal component-adding step and the acid-adding step shown in Figure 2, and by establishing the filtration step, Condensate 1 can be efficiently obtained.

The filter medium used in the filtration step is not particularly limited. A filter medium, such as stainless steel, filter paper, polypropylene, nylon, polyethylene, or polyester, may be used. Since an acid may be used sometimes, a filter medium made of polypropylene is preferable. The lower the air permeability of the filter medium, the higher the

yield that can be obtained. Therefore, it is 30 $cm^3/cm^2 \cdot sec$ or less, more preferably 10 $cm^3/cm^2 \cdot sec$ or less, and further preferably 1 $cm^3/cm^2 \cdot sec$ or less.

The filtration step may further comprise a compression step. In the compression step, a compressing apparatus may also be used. As such an apparatus, a general pressing apparatus such as a belt press, a screw press, or a filter press may be used without any particularly restriction on an apparatus. The pressure at the time of compression is preferably 0.2 MPa or more, and more preferably 0.4 MPa or more.

Subsequently, the method for producing a cellulose fiber-containing material of the present invention comprises an acid-adding step. In the method for producing a cellulose fiber-containing material, a di- or more-valent metal component is added to a dispersion containing cellulose fibers having a fiber width of 1000 nm or less, and thereafter, an acid is added thereto, so that at least a part of the di- or more-valent metal component is removed. Accordingly, the acid-adding step is also referred to as a metal salt-removing step. In the acid-adding step, it is preferable to remove the metal component as much as possible, but it is impossible to completely remove the metal component, and as a result, 0.5% by mass or less of the metal component remains in the cellulose fiber-containing material as a final product.

The acid component added in the acid-adding step may be either an inorganic acid or an organic acid. Examples of the inorganic acid include sulfuric acid, hydrochloric acid, nitric acid, and phosphoric acid. Examples of the organic acid include formic acid, acetic acid, citric acid, malic acid, lactic acid, adipic acid, sebacic acid, stearic acid, maleic acid, succinic acid, tartaric acid, fumaric acid, and gluconic acid. Among others, it is preferable to add at least one type selected from sulfuric acid and hydrochloric acid. The concentration of the used acid component (acidic liquid) is not particularly limited, but it is preferably 10% or less, more preferably 5% or less, and further preferably 1% or less. By setting the concentration of the acidic liquid within the above-described range, deterioration due to decomposition of cellulose can be suppressed. Besides, at least a part of the above-described acid may remain in the cellulose fiber-containing material, but a majority thereof is neutralized in the after-mentioned pH adjustment step.

Preferably, the acid-adding step further comprises a filtration step after addition of an acid. Such a filtration step is established between the acid-adding step and the pH adjustment step shown in Figure 2, and by establishing the filtration step, Condensate 2 can be efficiently obtained. In addition, the filtration step may further comprise a compression step.

The pH adjustment step is a step of adjusting the pH of a slurry to pH 4 or more, when the cellulose fiber-containing material is processed into a slurry having a solid concentration of 0.5% by mass. Since the pH adjustment step is a step of neutralizing the acid component added in the acid-adding step, it is also referred to as a neutralization step. That is, in the pH adjustment step, an alkaline component is added. Besides, at least a part of such an alkaline component may remain in the cellulose fiber-containing material, but a majority thereof is used in a neutralization reaction in the pH adjustment step.

The alkaline component added in the pH adjustment step may be either an inorganic alkaline compound, or an organic alkaline compound. Examples of the inorganic alkaline compound include lithium hydroxide, sodium hydroxide, potassium hydroxide, lithium carbonate, lithium hydrogen carbonate, potassium carbonate, potassium hydrogen carbonate, sodium carbonate, and sodium hydrogen carbonate. Examples of the organic alkaline compound include ammonia, hydrazine, methylamine, ethylamine, diethylamine, triethylamine, propylamine, dipropylamine, butylamine, diaminoethane, diaminopropane, diaminobutane, diaminopentane, diaminohexane, cyclohexylamine, aniline, tetramethyl ammonium hydroxide, tetraethyl ammonium hydroxide, tetrapropyl ammonium hydroxide, tetrabutyl ammonium hydroxide, benzyl trimethyl ammonium hydroxide, pyridine, and N,N-dimethyl-4-aminopyridine. Among others, at least one type selected from lithium hydroxide, sodium hydroxide, potassium hydroxide, lithium carbonate, lithium hydrogen carbonate, potassium carbonate, potassium hydrogen carbonate, sodium carbonate and sodium hydrogen carbonate is preferably used, and sodium hydroxide is particularly preferably used.

In the pH adjustment step, in addition to the above-described alkaline component, at least one type selected from a surfactant and a water-soluble organic compound is preferably added. In this case, examples of such a surfactant or a water-soluble organic compound to be added include the above-listed surfactants and water-soluble organic compounds.

In a case where a surfactant is added in the pH adjustment step, the surfactant is added in an amount of preferably 0.1 part by mass or more, and more preferably 0.5 parts by mass or more, with respect to 100 parts by mass of the fine cellulose fibers. On the other hand, the surfactant is added in an amount of preferably 20 parts by mass or less, and more preferably 10 parts by mass or less, with respect to 100 parts by mass of the fine cellulose fibers.

In a case where a water-soluble organic compound is added in the pH adjustment step, the water-soluble organic compound is added in an amount of preferably 5 parts by mass or more, and more preferably 10 parts by mass or more, with respect to 100 parts by mass of the fine cellulose fibers. On the other hand, the water-soluble organic compound is added in an amount of preferably 200 parts by mass or less, and more preferably 100 parts by mass or less, with respect to 100 parts by mass of the fine cellulose fibers.

The method for producing a cellulose fiber-containing material of the present invention may further comprise a pulverization step after completion of the acid-adding step, as well as the aforementioned steps. When the method

for producing a cellulose fiber-containing material comprises such a pulverization step, the pH adjustment step is carried out simultaneously with the pulverization step, or is carried out before or after the pulverization step. Thus, by carrying out the pH adjustment step at the same time with the pulverization step, or before or after the pulverization step, a cellulose fiber-containing material, in which when it is processed into a slurry having a solid concentration of 0.5% by mass, the pH of the slurry is 4 or more, can be efficiently obtained.

When the method for producing a cellulose fiber-containing material of the present invention comprises such a pulverization step, a method such as mixer pulverization, spray drying, oven drying, or dehydration using an organic solvent, may be adopted. These methods may also be combined with one another, as appropriate. The obtained cellulose fiber-containing material may be a particulate, or may also be in the form of flock, flake, or paste.

(Re-dispersion)

The ultrafine cellulose fiber-containing material produced by the aforementioned steps is preferably re-dispersed in a solvent such as water, before use. The type of a solvent used to obtain such a re-dispersed slurry is not particularly limited, and examples of the solvent include water, an organic solvent, and a mixture of water and an organic solvent. Examples of the organic solvent include alcohols, polyhydric alcohols, ketones, ethers, dimethylsulfoxide (DMSO), dimethylformamide (DMF), and dimethylacetamide (DMAc). Examples of the alcohols include methanol, ethanol, n-propanol, isopropanol, n-butanol, and t-butyl alcohol. Examples of the polyhydric alcohols include ethylene glycol, and glycerin. Examples of the ketones include acetone, and methyl ethyl ketone. Examples of the ethers include diethyl ether, tetrahydrofuran, ethylene glycol monomethyl ether, ethylene glycol monoethyl ether, ethylene glycol mono n-butyl ether, and ethylene glycol mono-t-butyl ether.

Re-dispersion of the ultrafine cellulose fiber-containing material may be carried out by a conventional method. For example, re-dispersion may be carried out by a step of preparing a liquid containing the ultrafine cellulose fiber-containing material by adding the aforementioned solvent to the ultrafine cellulose fiber-containing material, and a step of dispersing ultrafine cellulose fibers in the liquid containing the ultrafine cellulose fiber-containing material.

As a dispersing apparatus used in the step of dispersing ultrafine cellulose fibers in the liquid containing the ultrafine cellulose fiber-containing material, an apparatus similar to the defibration treatment apparatus described in the above section < Defibration treatment > may be used.

(Intended use)

The intended use of the ultrafine cellulose fiber-containing material of the present invention is not particularly limited. The ultrafine cellulose fiber-containing material is preferably used as a thickener, for example. In this case, a slurry obtained by re-dispersion of the ultrafine cellulose fiber-containing material may be used as a thickener in various intended uses (e.g., food products, cosmetic products, cement, paints, additives to inks, fluids for treating underground layers, etc.).

The ultrafine cellulose fiber-containing material of the present invention may be mixed with a resin or an emulsion, and thus, may also be used as a reinforcing material. In addition, a slurry of the cellulose fiber-containing material may be molded to produce a molded body. In this case, a resin or an emulsion is preferably mixed into such a slurry of the cellulose fiber-containing material. Besides, the molded body may have various shapes other than a sheet. Furthermore, a re-dispersed slurry of ultrafine cellulose fibers may be used to form a film, so that it may be used as various types of sheets. Since the cellulose fiber-containing material of the present invention is a highly transparent slurry, it is also preferably used for sheet formation.

Examples

The characteristics of the present invention will be more specifically described in the following examples and comparative examples. The materials, used amounts, ratios, treatment contents, treatment procedures, etc. can be appropriately modified, unless they are deviated from the gist of the present invention. Accordingly, the scope of the present invention should not be restrictively interpreted by the following specific examples.

< Production Example 1 >

Pulp manufactured by Oji Paper Co., Ltd. (solid content: 93% by mass, basis weight: 208 g/$m^2$, sheet-shaped, Canadian Standard Freeness (CSF) measured according to JIS P 8121 after defibration: 700 ml) was used as needle bleached kraft pulp. 100 Parts by mass (absolute dry mass) of the needle bleached kraft pulp were impregnated with a mixed aqueous solution of ammonium dihydrogen phosphate and urea, and were then compressed to result in 49 parts by mass of the ammonium dihydrogen phosphate and 130 parts by mass of the urea, so as to obtain chemical-impregnated

pulp. The obtained chemical-impregnated pulp was dried in a dryer of 105°C for moisture evaporation to pre-dry the chemical-impregnated pulp. Then, the chemical-impregnated pulp was heated in an air-blow dryer set at 140°C for 10 minutes, so that a phosphoric acid group was introduced into cellulose in the pulp to obtain phosphorylated pulp.

100 g (Absolute dry mass) of the obtained phosphorylated pulp was weighed, and 10 L of ion exchange water was then poured onto it, which was then uniformly dispersed by stirring, followed by filtration and dehydration to obtain a dehydrated sheet. This step was repeated twice. Subsequently, the obtained dehydrated sheet was diluted with 10 L of ion exchange water, and then, while stirring, a 1 N aqueous solution of sodium hydroxide was gradually added, so as to obtain a pulp slurry having a pH value of 12 or more and 13 or less. Thereafter, this pulp slurry dehydrated to obtain a dehydrated sheet, and 10 L of ion exchange water was then poured onto it, which was then uniformly dispersed by stirring, followed by filtration and dehydration to obtain a dehydrated sheet. This step was repeated twice.

The step of introducing a phosphoric acid group and the step of filtration and dehydration were repeatedly performed on the obtained dehydrated sheet in the same manner as that described above, so as to obtain a dehydrated sheet of phosphorylated cellulose. The infrared absorption spectrum of the obtained dehydrated sheet was measured by FT-IR. As a result, absorption based on the phosphoric acid group was observed in the range of 1230 $cm^{-1}$ or more and 1290 $cm^{-1}$ or less, and thus, addition of the phosphoric acid group was confirmed.

Ion exchange water was added to the obtained two-time phosphorylated cellulose to prepare 2% by mass of a slurry. This slurry was further treated at a pressure of 245 MPa using a wet pulverizing device (manufactured by Sugino Machine Limited; Ultimizer) three times to obtain ultrafine cellulose fibers. According to X-ray diffraction, it was confirmed that the ultrafine cellulose fibers maintained a cellulose type I crystal.

< Measurement of amount of substituent >

The amount of the substituent introduced is the amount of a phosphoric acid group introduced into a fiber raw material. The greater this value, the more the phosphoric acid groups that are introduced therein. The amount of the substituent introduced was measured by diluting the target ultrafine cellulose fibers with ion exchange water to have a content of 0.2% by mass, followed by a treatment with an ion exchange resin or titration using an alkali. In the treatment with an ion exchange resin, a strongly acidic ion exchange resin (Amberjet 1024; Organo Corp.; conditioning agent) was added at a volume ratio of 1/10 to the slurry containing 0.2% by mass of ultrafine cellulose fibers, followed by a stirring treatment for 1 hour. Then, the suspension was poured onto a mesh having an opening of 90 μm, so that the slurry was separated from the resin. In the titration using an alkali, a 0.1 N sodium hydroxide aqueous solution was added to the slurry containing the ultrafine cellulose fibers after the ion exchange, which change in the value of electrical conductivity exhibited by the slurry was measured. Specifically, the amount of the alkali (mmol) required for the first region in the curve shown in Figure 1 (phosphoric acid group) was divided by the solid content (g) in the slurry to be titrated to determine the amount of the substituent introduced (mmol/g). As a result of the calculation, the amount of the substituent introduced was found to be 1.60 mmol/g.

< Measurement of fiber width >

The fiber width of ultrafine cellulose fibers was measured by the following method.

A supernatant of defibrated pulp slurry was diluted with water to a concentration of 0.01% by mass or more and 0.1% by mass or less, and the obtained solution was then added dropwise onto a hydrophilized carbon grid film. After drying, it was stained with uranyl acetate, and was then observed under a transmission electron microscope (manufactured by JEOL; JEOL-2000EX). As a result, it was confirmed that the ultrafine cellulose fibers became ultrafine cellulose fibers having a fiber width of approximately 4 nm.

< Example 1 >

A dispersion (500 g) of ultrafine cellulose fibers (2% by mass) was taken, and 500 g of a calcium chloride aqueous solution that had been diluted to 0.5% by mass was then added to the dispersion for gelatinization. The mixture was compressed using a filter to obtain Condensate 1 having a solid concentration of 20% by mass. Condensate 1 was immersed in 1000 g of a 0.1 N hydrochloric acid aqueous solution for 30 minutes, was then filtrated, and was then compressed using a filter to obtain Condensate 2 having a solid concentration of 20% by mass. Condensate 2 was pulverized using a mixer (manufactured by Iwatani Corporation; Mill Mixer 800DG). 94 Parts by mass of a 0.35 N sodium hydroxide aqueous solution, 6 parts by mass of trehalose (manufactured by Tokyo Chemical Industry Co., Ltd.), and 1 part by mass of a nonionic surfactant (manufactured by SAN NOPCO LIMITED; SN Wet PUR) were added to 100 parts by mass of Condensate 2, and they were then fully blended using a spatula to obtain an ultrafine cellulose fiber-containing material (Condensate 3), in which the concentration of ultrafine cellulose fibers was 10% by mass.

< Example 2 >

The ultrafine cellulose fiber-containing material (Condensate 3) was obtained by the same method as that of Example 1, with the exception that aluminum chloride was used instead of calcium chloride in Example 1.

< Example 3 >

The ultrafine cellulose fiber-containing material (Condensate 3) was obtained by the same method as that of Example 1, with the exception that the nonionic surfactant (SN Wet PUR) was not added in Example 1.

< Example 4 >

The ultrafine cellulose fiber-containing material (Condensate 3) was obtained by the same method as that of Example 1, with the exception that urea (manufactured by Wako Pure Chemical Industries, Ltd.) was added instead of trehalose in Example 1.

< Example 5 >

The ultrafine cellulose fiber-containing material (Condensate 3) was obtained by the same method as that of Example 1, with the exception that trehalose was not added and the additive amount of a 0.35 N sodium hydroxide aqueous solution was changed to 100 parts by mass in Example 1.

< Example 6 >

The ultrafine cellulose fiber-containing material (Condensate 3) was obtained by the same method as that of Example 5, with the exception that the concentration of the sodium hydroxide aqueous solution was changed to 0.2 M in Example 5.

< Example 7 >

The ultrafine cellulose fiber-containing material (Condensate 3) was obtained by the same method as that of Example 5, with the exception that an anionic surfactant (manufactured by DKS Co. Ltd.; PriSurf A219B) was used instead of the nonionic surfactant (SN Wet PUR) in Example 5.

< Example 8 >

The ultrafine cellulose fiber-containing material (Condensate 3) was obtained by the same method as that of Example 5, with the exception that the nonionic surfactant (SN Wet PUR) was not added in Example 5.

< Example 9 >

The ultrafine cellulose fiber-containing material (Condensate 3) was obtained by the same method as that of Example 1, with the exception that the concentration of the sodium hydroxide aqueous solution was set at 0.5 M in Example 8.

< Example 10 >

In Example 1, upon production of a sample, the condensate was compressed until the solid concentration became, not 20% by mass, but 40% by mass in the second compression, so as to obtain Condensate 3. The ultrafine cellulose fiber-containing material (Condensate 3) was obtained by the same method as that of Example 1, with the exception that 100 parts by mass of a 0.7 N sodium hydroxide aqueous solution and 1 part by mass of the nonionic surfactant (SN Wet PUR) were added and were then blended into 100 parts by mass of Condensate 3, so that the concentration of ultrafine cellulose fibers in the condensate was 20% by mass.

< Example 11 >

The ultrafine cellulose fiber-containing material (Condensate 3) was obtained by the same method as that of Example 1, with the exception that the amount of trehalose was changed to 1 part by mass and the amount of a 0.35 N sodium hydroxide aqueous solution was changed to 99 parts by mass in Example 1.

< Comparative Example 1 >

The ultrafine cellulose fiber-containing material (Condensate 3) was obtained by the same method as that of Example 8, with the exception that ion exchange water was used instead of a sodium hydroxide aqueous solution in Example 8. When Preserving property evaluations 1 and 2 were carried out, the viscosity of this ultrafine cellulose fiber-containing material was apparently lower than other examples. Thus, this material was not evaluated in terms of preserving property.

< Comparative Example 2 >

In Example 1, upon production of a sample, the steps performed after the obtaining of Condensate 1 were omitted. Other than such omission, the ultrafine cellulose fiber-containing material (Condensate 1) was obtained by the same method as that of Example 1. However, since the obtained ultrafine cellulose fibers were not dispersed in water but were precipitated therein, the following evaluations could not be carried out.

< Comparative Example 3 >

The ultrafine cellulose fiber-containing material (Condensate 3) was obtained by the same method as that of Example 1, with the exception that the concentration of a sodium hydroxide aqueous solution was set at 0.05 M in Example 5. When Preserving property evaluation 2 was carried out, the viscosity of this ultrafine cellulose fiber-containing material was apparently lower than other examples. Thus, this material was not evaluated in terms of preserving property.

(Evaluation)

(Initial evaluations (pH, viscosity, and haze))

The ultrafine cellulose fiber-containing materials (condensates) obtained in the Examples and Comparative Examples were each added into ion exchange water to prepare 100 g of a slurry having a solid concentration of 0.5% by mass. The obtained slurry was stirred with a magnetic stirrer. After the slurry had been entirely blended (after 5 or more minutes had passed), the pH was measured.

Thereafter, while stirring the slurry with the magnetic stirrer, 1 N sodium hydroxide was added dropwise thereto, so that the pH of the slurry was adjusted to pH 10. The thus obtained slurry was stirred at 1500 rpm for 5 minutes, using a disperser (manufactured by PRIMIX Corporation; Stirring System T. K. ROBOMIX). Twenty-four hours later, the slurry was diluted with ion exchange water to a solid concentration of 0.4% by mass, and was then stirred using a disperser at 1500 rpm for 5 minutes. The obtained slurry was placed in a 50-mL glass screw bottle, and was then stirred using a planetary centrifugal supermixer (manufactured by THINKY CORPORATION; ARE-250) at 2200 rpm for 2 minutes, so that a degassing treatment was carried out. The resulting slurry was left at rest in an environment of 23°C for 24 hours, and thereafter, using a type B viscometer (manufactured by BROOKFIELD; analog viscometer T-LVT), the slurry was rotated at 23°C at a rotation number of 3 rpm for 3 minutes, and the viscosity thereof was then measured.

At the same time, 0.4% by mass of the above described slurry was diluted with ion exchange water to obtain a slurry having a solid concentration of 0.2% by mass. Thereafter, 0.2% by mass of the slurry was stirred with a magnetic stirrer, and the haze thereof was then measured in accordance with JIS K 7136, using a hazemeter (manufactured by MURAKAMI COLOR RESEARCH LABORATORY Co., Ltd.; HM-150). Upon the measurement, the slurry was placed in a glass cell for liquid having an optical path length of 1 cm (manufactured by Fujiwara Scientific Co., Ltd.; MG-40; inverse optical path), and then, the haze was measured. The zero point was measured with ion exchange water which was placed in the glass cell.

(Preserving property evaluation 1)

The ultrafine cellulose fiber-containing materials (condensates) obtained in the Examples and Comparative Examples were each preserved in an environment of 23 °C for 10 days, and thereafter, the viscosity and haze thereof were measured by the same methods as those in the initial evaluation.

(Preserving property evaluation 2)

The ultrafine cellulose fiber-containing materials (condensates) obtained in the Examples and Comparative Examples were each preserved in an environment of 50°C for 3 days, and thereafter, the viscosity and haze thereof were measured by the same methods as those in the initial evaluation.

(Analysis of polyvalent metal)

The ultrafine cellulose fiber-containing materials (condensates) obtained in the Examples and Comparative Examples (10 g each) were each weighed, and were heated at 525°C for incineration. Thereafter, the resultant was dissolved in 5 mL of 1% nitric acid for wet decomposition. The obtained solution was adjusted to a constant volume of 50 mL, was then filtrated through a 0.45-μm filter, and was then diluted, as appropriate. The resulting product was subjected to the ICP-AES measurement.

[Table 1]

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 | Comp. Ex. 3 |
|---|---|---|---|---|---|---|---|---|---|---|---|---|---|---|---|---|
| Composition | CNF (mass %) | | 10 | 10 | 10 | 10 | 10 | 10 | 10 | 10 | 10 | 20 | 10 | 10 | 10 | 10 |
| | Polyvalent metals | Calcium (mass %) | 0.08 | - | 0.08 | 0.08 | 0.08 | 0.08 | 0.08 | 0.08 | 0.08 | 0.12 | 0.08 | 0.08 | 0.7 | 0.08 |
| | | Aluminum (mass %) | - | 0.07 | - | - | - | - | - | - | - | - | - | - | - | - |
| | Additives | Nonionic surfactant (mass %) | 0.5 | 0.5 | - | 0.5 | 0.5 | 0.5 | - | - | - | 0.5 | 0.5 | - | - | 0.5 |
| | | Anionic surfactant (mass %) | - | - | - | - | - | - | 0.5 | - | - | - | - | - | - | - |
| | | Trehalose (mass %) | 3 | 3 | 3 | - | - | - | - | - | - | - | 0.5 | - | - | |
| | | Urea (mass %) | - | - | - | 3 | - | - | - | - | - | - | - | - | - | - |
| | Water | | 86.42 | 86.43 | 86.92 | 86.42 | 89.42 | 89.42 | 89.42 | 89.92 | 89.92 | 79.38 | 88.92 | 89.92 | 89.3 | 89.42 |
| pH | | | 7.1 | 7.9 | 7.1 | 7.5 | 7.3 | 4.8 | 8.1 | 7.7 | 12.5 | 7.2 | 6.9 | 2.7 | 5.9 | 3.1 |
| Viscosity [mPa·s] (before storage) | | | 8040 | 7800 | 8800 | 7540 | 10600 | 13100 | 11060 | 16500 | 4120 | 10300 | 9440 | 17800 | × | 12100 |
| Liquid haze [%] (before storage) | | | 1.3 | 1.6 | 1.3 | 3.0 | 2.1 | 1.0 | 3.2 | 1.0 | 3.6 | 2.1 | 3.1 | 1.0 | × | 1.6 |
| After storage (23°C, 10 days) | Viscosity [mPa·s] | | 7980 | 8100 | 5220 | 8010 | 12200 | 4750 | 4850 | 6613 | 860 | 7970 | 9010 | × | × | 1080 |
| | Liquid haze [%] | | 1.9 | 2.2 | 3.6 | 3.5 | 2.6 | 2.9 | 5.1 | 3.6 | 9.2 | 3.3 | 4.2 | × | × | 7.1 |
| After storage (50°C, 3 days) | Viscosity [mPa·s] | | 4020 | 3800 | 1720 | 3660 | 4880 | 2000 | 2080 | × | × | 3300 | 4200 | × | × | × |
| | Liquid haze [%] | | 6.1 | 8.8 | 4.3 | 6.3 | 3.8 | 6.6 | 4.2 | × | × | 5.6 | 4.9 | × | × | × |
| Viscosity retention percentage [%] (23°C) | | | 99.3 | 103.8 | 59.3 | 106.2 | 115.1 | 36.3 | 43.9 | 40.1 | 20.9 | 77.4 | 95.4 | × | × | 8.9 |
| Viscosity retention percentage [%] (50°C) | | | 50.0 | 48.7 | 19.5 | 48.5 | 46.0 | 15.3 | 18.8 | × | × | 32.0 | 44.5 | × | × | × |

The condensates obtained in the Examples were excellent in terms of preservation stability, although they had a high concentration. In contrast, with regard to the condensates obtained in Comparative Examples 1 and 3, the viscosity was decreased after storage. In Comparative Example 2, ultrafine cellulose fibers were precipitated, and thus, a highly concentrated condensate could not be obtained. Besides, in Comparative Example 2, the viscosity before storage was apparently lower than those of Comparative Example 3 and other examples, and thus, the measurement was not carried out. In addition, in Comparative Examples 1 and 2, the viscosity after storage was apparently lower than that of Comparative Example 3, and thus, the measurement was not carried out.

In Examples 8 and 9, when the condensates were stored at 23°C, they exhibited favorable preservation stability. However, when the condensates were stored at 50°C, their viscosity tended to slightly decrease.

## Claims

1. A cellulose fiber-containing material comprising cellulose fibers having a fiber width of 1000 nm or less and a di- or more-valent metal component, wherein
   the content of the cellulose fibers is 5% by mass or more with respect to the total mass of the cellulose fiber-containing material,
   the content of the metal component is 0.5% by mass or less with respect to the total mass of the cellulose fiber-containing material, and
   when the cellulose fiber-containing material is processed into a slurry having a solid concentration of 0.5% by mass, the pH of the slurry is 4 or more.

2. The cellulose fiber-containing material according to claim 1, which further comprises a surfactant.

3. The cellulose fiber-containing material according to claim 2, wherein the surfactant is a nonionic surfactant.

4. The cellulose fiber-containing material according to any one of claims 1 to 3, which further comprises a water-soluble organic compound.

5. The cellulose fiber-containing material according to any one of claims 1 to 4, which is a solid.

6. The cellulose fiber-containing material according to any one of claims 1 to 5, having a viscosity retention percentage of 10% or more, wherein the viscosity retention percentage is defined according to the following equation:

   Viscosity retention percentage (%) = slurry viscosity of sample after being left at rest at 23°C for 240 hours / initial slurry viscosity of sample before storage x 100,

   provided that the slurry viscosity of the sample after being left at rest at 23°C for 240 hours is a slurry viscosity obtained by leaving the cellulose fiber-containing material at 23°C for 240 hours, then processing the cellulose fiber-containing material into a slurry having a solid concentration of 0.4% by mass, and then measuring the viscosity under conditions of 25°C and a rotation number of 3 rpm, whereas the initial slurry viscosity of the sample before storage is a slurry viscosity obtained by processing the cellulose fiber-containing material into a slurry having a solid concentration of 0.4% by mass, and then measuring the viscosity under conditions of 25°C and a rotation number of 3 rpm.

7. A method for producing a cellulose fiber-containing material, comprising, in the following order,
   obtaining a dispersion comprising cellulose fibers having a fiber width of 1000 nm or less,
   adding a di- or more-valent metal component to the dispersion,
   adding an acid, and
   adjusting pH, wherein
   the adjusting pH is performing adjustment pH, so that when the cellulose fiber-containing material is processed into a slurry having a solid concentration of 0.5% by mass, the pH of the slurry can be 4 or more.

8. The method for producing a cellulose fiber-containing material according to claim 7, wherein
   the adding a di- or more-valent metal component further comprises a filtering after completion of the addition of the di- or more-valent metal component, and
   the adding an acid further comprises a filtering after completion of the addition of an acid.

**9.** The method for producing a cellulose fiber-containing material according to claim 7 or 8, which further comprises a pulverization after completion of the adding an acid.

[Figure 1]

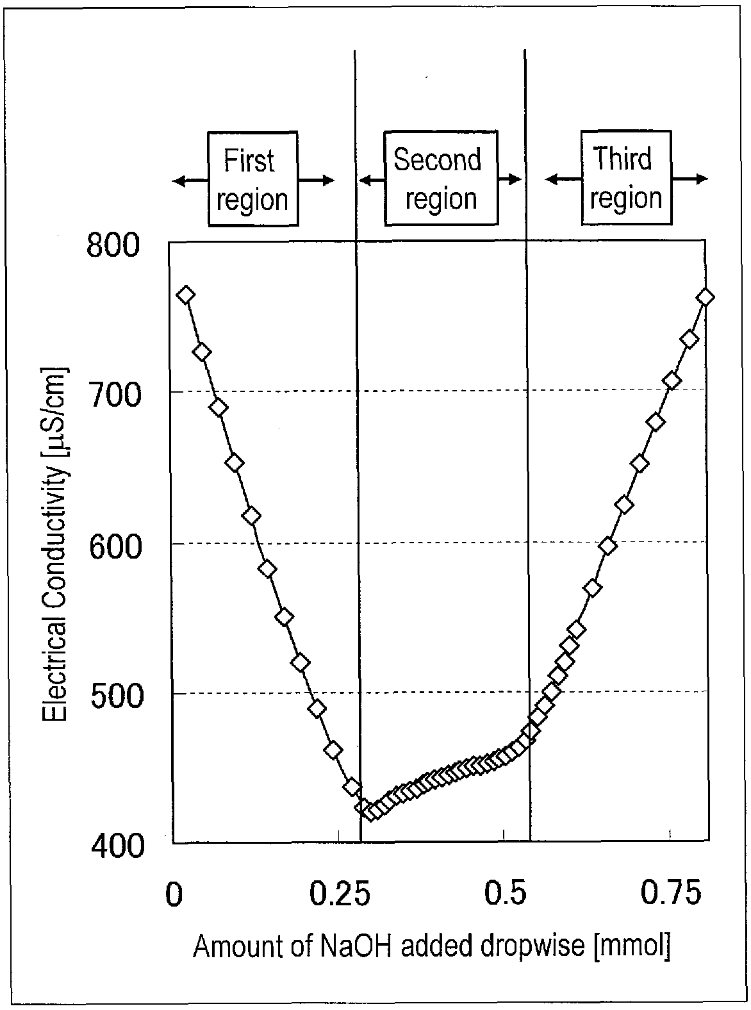
First region
Second region
Third region
800
700
600
500
400
Electrical Conductivity [µS/cm]
0
0.25
0.5
0.75
Amount of NaOH added dropwise [mmol]

[Figure 2]

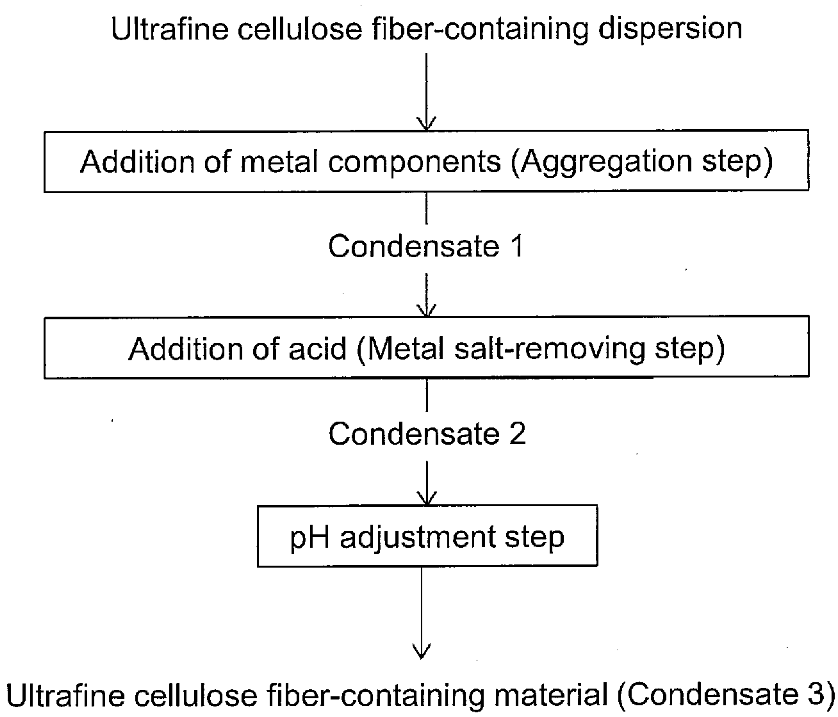
Ultrafine cellulose fiber-containing dispersion
Addition of metal components (Aggregation step)
Condensate 1
Addition of acid (Metal salt-removing step)
Condensate 2
pH adjustment step
Ultrafine cellulose fiber-containing material (Condensate 3)

## INTERNATIONAL SEARCH REPORT

International application No. PCT/JP2017/030252

A. CLASSIFICATION OF SUBJECT MATTER
*C08L1/02*(2006.01)i, *C08J3/02*(2006.01)i, *C08K3/10*(2006.01)i, *C09K3/00*(2006.01)i

According to International Patent Classification (IPC) or to both national classification and IPC

B. FIELDS SEARCHED

Minimum documentation searched (classification system followed by classification symbols)
C08L1/00-1/32, C08J3/00-3/28, C08K3/00-3/40, C09K3/00-3/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JMEDPlus/JST7580(JDreamIII), CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | WO 2010/89948 A1 (Kao Corp., The University of Tokyo), 12 August 2010 (12.08.2010), entire text & JP 2010-202856 A & US 2012/0000392 A1 entire text & EP 2395027 A1 & CN 102264766 A | 1-9 |
| A | JP 2010-37348 A (Dai-Ichi Kogyo Seiyaku Co., Ltd.), 18 February 2010 (18.02.2010), entire text (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 September 2017 (28.09.17) | 10 October 2017 (10.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/030252

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-53602 A (Mitsubishi Paper Mills Ltd.), 28 February 1995 (28.02.1995), entire text (Family: none) | 1-9 |
| P,X | WO 2017/47768 A1 (Oji Holdings Corp.), 23 March 2017 (23.03.2017), claims 1 to 17; examples A11, B24, C5, D10 & JP 2017-57291 A & JP 2017-57292 A & JP 2017-57389 A & JP 2017-57390 A & JP 2017-57391 A & JP 5910786 B | 1-9 |
| P,A | JP 2017-57285 A (Oji Holdings Corp.), 23 March 2017 (23.03.2017), entire text & JP 5950012 B & WO 2017/047631 A1 | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015134873 A
- JP 2013104133 A
- JP 2014118521 A
- WO 2014024876 A
- WO 2012107642 A
- WO 2013121086 A


### Non-patent literature cited in the description


- **SEAGAL et al.** *Textile Research Journal,* 1959, vol. 29, 786